# EUROPÄISCHE PATENTSCHRIFT

(11) **EP 1 797 490 B1**
(45) Veröffentlichungstag und Bekanntmachung des Hinweises auf die Patenterteilung: **11.02.2009**
(21) Anmeldenummer: 05786895.2
(22) Anmeldetag: 14.09.2005
(51) Int. Cl.: G05D 16/20, H01F 7/08

(54) **VERFAHREN UND VORRICHTUNG ZUR ERMITTLUNG EINES MIT EINER DITHERFREQUENZ ÜBERLAGERTEN PWM-SIGNALS ZUR STEUERUNG EINES MAGNETVENTILS**
METHOD AND DEVICE FOR DETERMINING A PWM SIGNAL ON WHICH A DITHER FREQUENCY IS SUPERIMPOSED IN ORDER TO CONTROL A SOLENOID VALVE
PROCEDE ET DISPOSITIF POUR DETERMINER UN SIGNAL PWM SUR LEQUEL UNE FREQUENCE DE TREMBLEMENT EST SUPERPOSEE POUR COMMANDER UNE VANNE MAGNETIQUE

(30) Priorität: 06.10.2004 DE 102004048706
(43) Veröffentlichungstag der Anmeldung: 20.06.2007
(73) Patentinhaber: Continental Automotive GmbH, 30165 Hannover (DE)
(72) Erfinder: KISSLER, Jose, 93077 Bad Abbach (DE); RÖHRL,Thomas, 93092 Barbing (DE)
(86) Internationale Anmeldenummer: PCT/EP2005/054567
(87) Internationale Veröffentlichungsnummer: WO 2006/037715

(56) Entgegenhaltungen:
- EP-A- 0 929 020
- DE-A1- 4 423 102
- US-A- 4 960 365

## Beschreibung

Die Erfindung geht gemäß dem Oberbegriff von Anspruch 1 von einem Verfahren zur Ermittlung eines Steuersignals für ein Magnetventil aus. Das Steuersignal wird dabei von einem PWM-Signal (Pulsweiten moduliertes Signal) gebildet, das mit einem Dither-Signal mit niedrigerer Frequenz überlagert wird. Das Steuersignal weist eine so hohe Frequenz auf, dass der Anker des Magnetventils zwischen einer geöffneten und einer geschlossenen Stellung eine Zwischenstellung, vorzugsweise eine Mittellage (Stellung "halb offen") einnimmt. Das Dither-Signal soll dabei bewirken, dass der Anker des Magnetventils in der Mittellage eine leichte Schwingung ausübt. Dadurch reduzieren sich Reibungswiderstände an den beweglichen Teilen im Magnetventil, so dass das Magnetventil schneller und präziser geschaltet werden kann.

Eine alternative Ausgestaltung der Erfindung geht entsprechend dem Oberbegriff von Anspruch 7 von einer Vorrichtung zur Steuerung eines Magnetventils aus. Diese Vorrichtung arbeitet nach dem vorgenannten Verfahren und weist einen Stromregler, eine Dither-Einheit und eine PWM-Einheit auf.

Ein Verfahren zum Ermittlung eines Steuersignals für ein Magnetventil ist aus DE 4423102 A1 bekannt.

Magnetventile werden insbesondere in Kraftfahrzeugen eingesetzt, um in hydraulischen Leitungen Kanäle zu öffnen oder zu schließen. Beispielsweise können mit Magnetventilen in einem automatischen Getriebe die einzelnen Schaltstufen ruckfrei und verschleißarm geschaltet werden. Sehr häufig werden dabei die Magnetventile im linearen beziehungsweise analogen Bereich durch PWM-Signale mit einer für das Magnetventil hohen Frequenz, beispielsweise mit 1 KHz betrieben. Der Anker des Magnetventils kann mechanisch dieser hohen Ansteuerfrequenz nicht synchron folgen und nimmt dann eine Zwischenstellung ein. Bei einem Tastverhältnis von 50% des PWM-Signals entspricht dies dann der Mittellage des Ventil "halb offen".

Nachteilig bei dieser Lösung ist, dass sowohl der Anker als auch das den Durchfluss steuernde Ventil mechanischen Reibungskräfte unterliegt, die zu einer ungenauen Regelung der Ventilstellung führen. Hinzu kommt, dass der Magnetkreis eine Hysterese aufweist, durch die die Regelgenauigkeit weiter verschlechtert wird.

Bisher wurden diese Probleme dadurch gelöst, dass die Frequenz des Steuersignals beispielsweise auf 300 Hz soweit heruntergesetzt wird, dass der Anker gerade noch ein wenig folgen kann und in der Zwischenstellung oder Mittellage möglichst nur minimal ausgelenkt wird. Dadurch ergibt sich um die Zwischenstellung eine Schwingung des Ankers mit geringer Amplitude und des mit ihm verbundenen Ventils, die üblicherweise als Dither-Schwingung (Dither-Signal) bezeichnet wird. Diese Dither-Schwingung ist prinzipiell erwünscht, da durch sie die Reibungswiderstände an den beweglichen Teilen des Magnetventils reduziert werden können. Allerdings ist es sehr schwierig, eine möglichst konstante Amplitude des Dither-Signals vorzugeben, da das Dither-Signal sowohl von der PWM-Frequenz als auch vom Tastverhältnis (duty cycle) und damit vom in dem Magnetventil fließenden Spulenstrom abhängt. Bei dem bekannten Verfahren ist es daher nicht möglich, für das Dither-Signal eine konstante Amplitude zu bilden, da die PWM-Frequenz kontinuierlich in Abhängigkeit vom vorgegebenen Strom-Sollwert nachregelt werden muss und sich dabei die Amplitude und die Frequenz des Dither-Signals entsprechend ändern. Eine konstante Amplitude und eine konstante Frequenz für das Dither-Signal ist mit dem bekannten Verfahren nicht realisierbar.

Eine weitere bekannte Lösung für die genannten Probleme besteht darin, dass der hohen Frequenz des PWM-Signals ein niederfrequentes Dither-Signal durch Amplitudenmodulation überlagert wird. Die hohe Frequenz wird von einem Stromregler (Zweipunktregler) erzeugt, der die Regelung des Mittelwertes des Ventilstromes steuert. Die niedrige Modulationsfrequenz (Dither-Frequenz) wird durch Änderung des Strom-Sollwertes erzielt. Diese Lösung wird durch Hardware realisiert, die mit einem speziellen Baustein ausgestaltet ist und eine entsprechend ausgebildete integrierte Schaltung (IC) aufweist, um möglichst kurze Reaktionszeiten zu erreichen. Diese Lösung ist nicht nur kostenintensiv, sondern ist auch sehr unflexibel, da die integrierte Schaltung nur für einen speziellen Magnetventiltyp geeignete Dither-Signale erzeugen kann.

Bei einer weiteren bekannten Lösung wird der Stromregler durch ein spezielles Softwareprogramm nachgebildet. Das Softwareprogramm ist dann Bestandteil eines Hauptprogrammes einer Rechnereinheit. Zunächst wird das Dither-Signal durch Modulation des Sollwertes vor dem Signal des Stromreglers erzeugt. Bei dieser Lösung können jedoch nur niedrige Dither-Frequenzen verwendet werden. Liegt die Dither-Frequenz jedoch im Bereich der Ansteuerfrequenz, dann kann eine unerwünschte niederfrequente Schwebung des Magnetstromes auftreten. Dadurch kann sogar das hydraulische System beschädigt werden. Die Schwebung kommt zustande, weil die Dither-Frequenz nicht mit der Ansteuerfrequenz synchronisiert werden kann.

Der Erfindung liegt die Aufgabe zu Grunde, die Ansteuerung eines Magnetventils mit einem Dither-Signal zu verbessern. Diese Aufgabe wird mit den kennzeichnenden Merkmalen der nebengeordneten Ansprüche 1 und 7 gelöst.

Bei dem erfindungsgemäßen Verfahren zur Ermittlung eines Steuersignals für ein Magnetventil und bei der Vorrichtung mit den kennzeichnenden Merkmalen der nebengeordneten Ansprüche 1 bzw. 7 ergibt sich der Vorteil, dass sowohl das Dither-Signal als auch das PWM-Signal unabhängig von der Stromregelung des Stromreglers erzeugt werden können. Dadurch kann in vorteilhafter Weise eine konstante Amplitude für das Dither-Signal gebildet werden, so dass der Anker des Magnetventils stets mit gleichen Ausschlägen um seine Mittellage schwingt, ohne dass die Ansteuerfrequenz des PWM-Signals einen nachteiligen Einfluss ausüben kann. Durch den sich dadurch ergebenden reduzierten Reibungswiderstand lässt sich somit in vorteilhafter Weise die Stellung des Ankers sehr viel genauer einstellen und regeln. Als besonders vorteilhaft wird dabei auch angesehen, dass der Hauptprozessor, der mit einer Vielzahl von Steueraufgaben ohnehin ausgelastet ist, wesentlich entlastet werden kann. Er steht somit für andere Aufgaben zur Verfügung.

Durch die in den abhängigen Ansprüchen aufgeführten Maßnahmen sind vorteilhafte Weiterbildungen und Verbesserungen des in den nebengeordneten Ansprüche 1 und 7 angegebenen Verfahrens beziehungsweise der Vorrichtung gegeben. Durch die niedrige Frequenz des Dither-Signals kann die Schwingung des Ankers des Magnetventils individuell auf den zu verwendenden Magnetventiltyp angepasst werden, so dass sich im Vergleich zu der bekannten Hardware-Lösung eine extrem hohe Flexibilität ergibt. Denn die Anpassung an andere Magnetventiltypen kann durch eine einfache Kalibrierung erfolgen. Des Weiteren ist von Vorteil, dass ohne großen Mehraufwand auch hohe Dither-Frequenzen verwendet werden können, um den Reibungswiderstand weiter zu reduzieren.

Es hat sich als vorteilhafte Lösung herausgestellt, die Frequenz für das Dither-Signal so zu wählen, dass sie einen geradzahligen Teiler, vorzugsweise ein Viertel der Frequenz des PWM-Signals beträgt. Dadurch wird unter allen Betriebsbedingungen vermieden, dass sich Schwebungen oder andere störende Effekte ausbilden können.

Für eine bestimmte Gruppe von Magnetventilen hat sich als Vorteil herausgestellt, die Frequenz für das Dither-Signal im Bereich zwischen 100 und 500 Hz zu wählen.

Zur Steuerung der Mittellage des Ankers des Magnetventils ist vorgesehen, für das zusammengeführte Dither-Signal mit dem PWM-Signal beispielsweise jeweils zwei verlängerte und nachfolgend zwei verkürzte PWM-Signale zu bilden. Mit dieser Maßnahme wird exakt bei jeder zweiten Periode das Tastverhältnis um die gewünschte Amplitude des Dither-Signals verändert. Somit ergibt sich eine Frequenz für das Dither-Signal, die exakt ein Viertel der Frequenz des PWM-Signals beträgt.

Erfindungsgemäß ist weiter vorgesehen, die zeitgesteuerte Rechnereinheit bei einem Stromsprung kurzzeitig anzuhalten und nach dem Einschwingen das Dither-Signal wieder einzuschalten, um ein schnelleres Einschwingverhalten zu erreichen.

Bei der Vorrichtung erscheint des Weiteren von Vorteil, als zusätzliche Rechnereinheit eine zeitgesteuerte Recheneinheit (Time Processing Unit) zu verwenden, um die beiden Signale auf einfache Weise mit dem Stromsignal zu synchronisieren.

Das aus dem Dither-Signal und dem PWM-Signal überlagerte Steuersignal für das Magnetventil lässt sich am einfachsten mit einem Softwareprogramm realisieren. Diese Lösung ist gegenüber einer Hardwarelösung insbesondere zur Adaptierung an verschiedene Magnetventiltypen besonders flexibel.

Die erfindungsgemäße Vorrichtung erscheint zur Steuerung einer mechanischen Einheit in einem Kraftfahrzeug, vorzugsweise für ein automatisches Getriebe, besonders von Vorteil, da sich die einzelnen Schaltstufen schonend für das Material, ruckfrei und für den Fahrer kaum spürbar schalten lassen.

Ein Ausführungsbeispiel der Erfindung ist in der Zeichnung dargestellt und wird in der nachfolgenden Beschreibung näher erläutert.
- Figur 1: zeigt bei einem bekannten Verfahren im oberen Teil ein erstes Diagramm mit einem Stromverlauf eines Mag- netventils und im unteren Teil ein zugeordnetes PWM- Signal mit einem Tastverhältnis von 50%,
- Figur 2: zeigt bei einem bekannten Verfahren im oberen Teil ein zweites Diagramm mit einem Stromverlauf eines Magnetventils und im unteren Teil ein zugeordnetes PWM-Signal mit einem Tastverhältnis vom 25%,
- Figur 3: zeigt eine weitere bekannte Vorrichtung zur Bildung eines Steuersignals für ein Magnetventil,
- Figur 4: zeigt ein Ausführungsbeispiel der Erfindung mit einer Vorrichtung zur Bildung eines Ansteuersignals,
- Figur 5: zeigt ein drittes Diagramm mit einem erfindungsgemä- ßen überlagerten Steuersignal,
- Figur 6: zeigt ein viertes Diagramm mit dem dazu gehörenden PWM-Signal,
- Figur 7: zeigt ein weiteres Stromdiagramm mit einer überlager- ten Ditherfrequenz,
- Figur 8: zeigt ein Diagramm mit einem am Magnetventil gemesse- nen Stromverlauf und das zugeordnete PWM-Signal und
- Figur 9: zeigt den Strom- und Spannungsverlauf am Magnetventil über eine Periode.

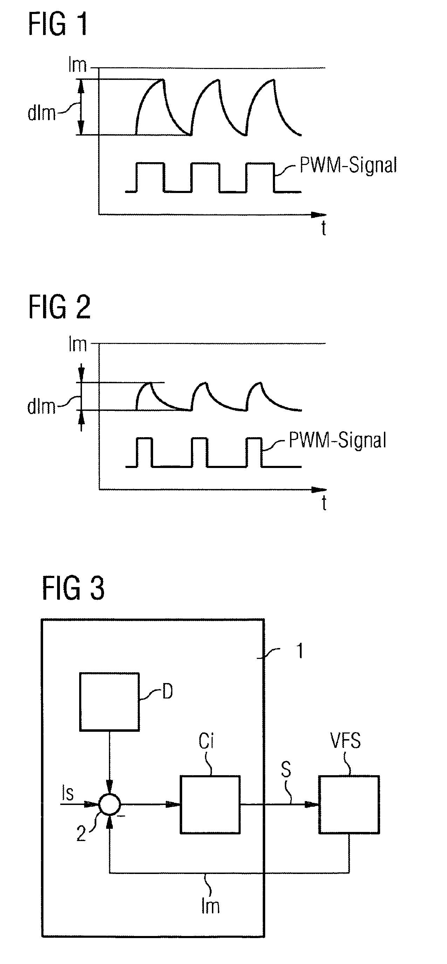

Zum besseren Verständnis der Erfindung wird zunächst an Hand der Figuren 1 bis 3 erläutert, wie beim bekannten Stand der Technik die Bildung eines Steuersignals zur Steuerung eines Magnetventils durchgeführt wird. Wie aus Figur 1 ersichtlich ist, wird die Ansteuerfrequenz des PWM-Signals beispielsweise auf 300 Hz so weit reduziert, dass bei einem Tastverhältnis von 50% der Anker des Magnetventils dem PWM-Signal gerade noch ein wenig folgen kann. Dadurch ergibt sich ein Schwingen des Ankers um die Mittellage, wobei der Anker nur wenig ausgelenkt wird. Dieses Schwingen um die Mittellage wird im Fachjargon auch als Dither-Frequenz bezeichnet. Im oberen Diagramm ist eine Verlaufskurve für den am Magnetventil gemessenen Strom dargestellt. Im unteren Teil von Figur 1 ist als Spannungssignal das entsprechende Steuersignal dargestellt, das als pulsweiten moduliertes Signal (PWM-Signal) ausgebildet ist. Wie in Figur 1 erkennbar ist, ist in diesem Fall die Amplitudendifferenz dIm relativ groß ausgebildet. Das bedeutet, dass die Schwingung des Ankers des Magnetventils um die Mittellage ebenfalls relativ groß ist.

In einem zweiten Diagramm entsprechend der Figur 2 wurde das Tastverhältnis auf 25% reduziert. Der Stromverlauf im oberen Teil des zweiten Diagramms zeigt eine entsprechend kleinere Amplitudendifferenz dIm. Dadurch wird auch die Schwingung des Ankers um seine Mittellage reduziert. Dieses Verhalten führt zu unterschiedlichen Reibungswiderständen an den beweglichen Teilen des Magnetventils, so dass eine genaue Positionsregelung erschwert wird.

Im unteren Teil des zweiten Diagramms ist das entsprechende PWM-Signal dargestellt.

Wie aus den beiden Diagrammen der Figuren 1 und 2 erkennbar ist, ist die Amplitude des Dither-Signals direkt von der Frequenz des PWM-Signals als auch von dem Tastverhältnis abhängig. Für optimale Verhältnisse ist jedoch eine konstante Amplitude des Dither-Signals gewünscht. Daher muss die Frequenz des PWM-Signals kontinuierlich in Abhängigkeit vom Strom-Sollwert angepasst werden. Bei diesem bekannten Verfahren ist daher die gleichzeitige Bildung einer konstanten Amplitude und einer konstanten Frequenz für das Dither-Signal nicht möglich.

Figur 3 zeigt eine Vorrichtung 1 einer bekannten Schaltungsanordnung zur Bildung eines Steuersignals S für ein Magnetventil VFS. Es weist eine Dither-Einheit D und einen Stromregler Ci auf. An einem Summenpunkt 2 wird ein vorgegebener Sollstrom Is mit einem am Magnetventil VFS gemessenen Strom Im zusammengeführt und die Differenz dem Stromregler Ci zugeführt. Der Stromregler Ci bildet daraus ein entsprechend korrigiertes Steuersignal für das Magnetventil VFS aus. Nachteilig ist hier, dass diese Vorrichtung nur für niedrige Frequenzen des Dither-Signals anwendbar ist. Liegt dagegen die Frequenz des Dither-Signals in der Nähe der Ansteuerfrequenz des PWM-Signals, kann es zu einer unerwünschten niederfrequenten Schwebung im Strom führen. Auch kann das hydraulische System Schaden nehmen.

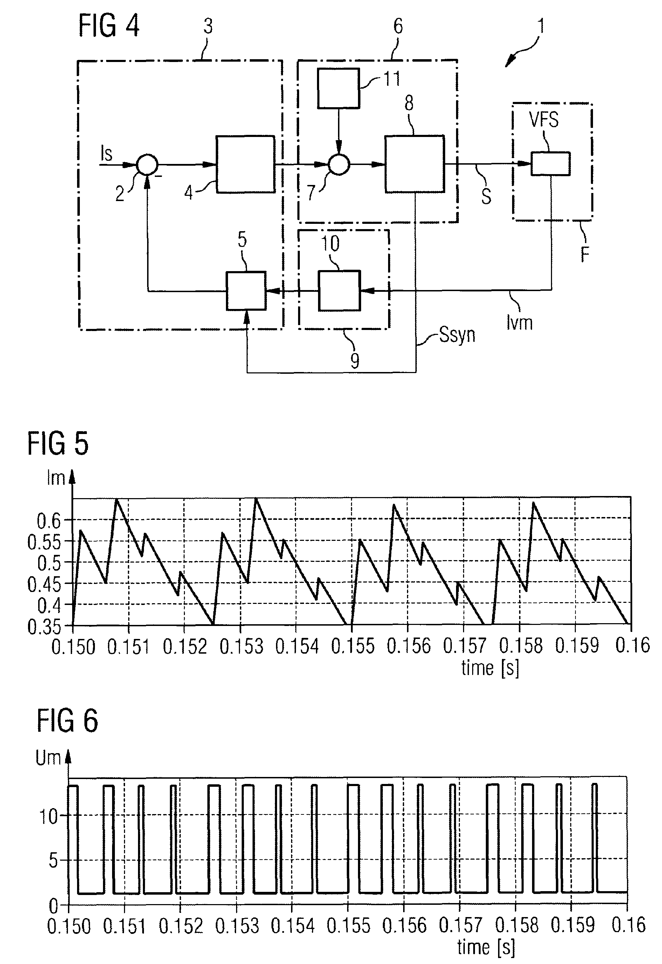

Figur 4 zeigt ein Ausführungsbeispiel einer erfindungsgemäßen Vorrichtung 1 zur Generierung eines Steuersignals S für ein Magnetventil VFS. Wesentliche Bestandteile sind ein Hauptrechner 3, eine Rechnereinheit 6 und ein Filter 10. Der Hauptrechner 3 ist bereits in einem Steuergerät eines Fahrzeugs vorhanden, um diverse Steueraufgaben abzuarbeiten. Beispielsweise weist der Hauptrechner 3 ein Softwareprogramm auf, mit dem die Stromregelung für ein oder mehrere Magnetventile VFS sowie das Tastverhältnis für das PWM-Signal generiert werden können. Zu diesem Zweck weist der Hauptrechner 3 einen Stromregler 4 auf, der vorzugsweise als PID-Regler (Proportional-Integral-Differenz-Regler) 4 ausgebildet ist. Der PID-Regler 4 erhält von einem Summenpunkt 2 ein Differenzsignal, das aus einem Sollwert Is und einem gemessenen und gefilterten Ventilstrom Ivm gebildet wird. Des Weiteren ist ein A/D-Wandler 5 zwischengeschaltet, der den am Magnetventil VFS gemessenen und gefilterten Ventilstrom Ivm digitalisiert. Der A/D-Wandler 5 ist mit der Frequenz des PWM-Signals synchronisiert. Der PID-Regler 4 bildet dann eine Ausgangsgröße für das Tastverhältnis (Duty Cycle) für das PWM-Signal S.

Ein weiterer erfindungswesentlicher Block wird von einer unabhängigen Rechnereinheit 6 gebildet, die vorzugsweise als zeitgesteuerte Rechnereinheit (TPU-Rechner, Timer Processing Unit) ausgebildet ist und von der Stromregelung für das Magnetventil VFS abgekoppelt ist. Der TPU-Rechner 6 ist in der Regel schon vorhanden. Er weist eine Dither-Einheit 11 und eine PWM-Einheit 8 zur Erzeugung des Dither-Signals und des PWM-Signals auf. Dazu wird ein Softwareprogramm verwendet, mit dem sowohl das PWM-Signal als auch das Dither-Signal mit konstanter Amplitude und/oder Frequenz gebildet und die beiden Signale miteinander verknüpft werden. Die beiden Einheiten 8,11 werden von dem Ausgangssignal (Ansteuersignal) des PID-Reglers 4 über einen gemeinsamen Knotenpunkt 7 gesteuert. Zur Synchronisation der Phase ist die PWM-Einheit 8 über eine Leitung mit dem A/D-Wandler 5 verbunden, über die ein Synchronisationssignal Ssyn auf den A/D-Wandler 5 gegeben wird. Am Ausgang der PWM-Einheit 8 steht nun das mit der Frequenz des Dither-Signals überlagerte PWM-Signal S zur Ansteuerung des Magnetventils VFS zur Verfügung. Die Erzeugung des Dither-Signals und des PWM-Signals läuft somit synchron und wird mit konstanter Amplitude zyklisch generiert. Der Hauptrechner 3 ist somit nur noch für die Stromregelung zuständig, so dass er weitgehend entlastet wird.

In einem dritten Block ist eine Filtereinheit 9 vorgesehen. Die Filtereinheit 9 weist im Wesentlichen ein Filter 10 auf, das als Tiefpassfilter ausgebildet ist. Das Tiefpassfilter 10 ist dem A/D-Wandler 5 vorgeschaltet und eingangsseitig mit dem Magnetventil VFS verbunden und filtert den gemessenen Ventilstrom Ivm. Das Tiefpassfilter ist so ausgelegt, dass bevorzugt die hochfrequenten Signale herausgefiltert werden, damit der Stromregler möglichst nur auf die Strommittelwerte regelt.

Das erfindungsgemäße Verfahren synchronisiert die Frequenz des Dither-Signals und der Ansteuerfrequenz des PWM-Signals. Dadurch werden unerwünschte Schwebungen und dadurch mögliche Schäden an der hydraulischen Einrichtung vermieden. Des Weiteren lassen sich im Vergleich zur PWM-Frequenz auch hohe Frequenzen für das Dither-Signal realisieren. Des weiteren kann durch die Softwarelösung nicht nur eine einfache Anpassung an unterschiedliche Magnetventile VFS durchgeführt werden, sondern auch auf teuere Hardwareregler verzichtet werden.

Das erfindungsgemäße Verfahren ist ebenfalls für niedrige Dither-Frequenzen anwendbar, da die Dither-Frequenz regelungstechnisch gesehen als Störgröße eingespeist wird. Wenn der Tiefpass 10 am Eingang des Stromreglers 4 die Dither-Frequenz nicht komplett filtern kann, weil diese in der Größenordnung der Regelfrequenzen liegen, kann ein Selektivfilter dem Stromregler 4 vorgeschaltet werden, um ihn von der Dither-Frequenz zu entkoppeln. Dadurch lassen sich alle Applikationen kostengünstig realisieren.

Ein weiterer Vorteil dieser Anordnung ist, dass bei geänderten Parametern, insbesondere Ventilparametern, beispielsweise einer Änderung der Temperatur oder Versorgungsspannung eine einfache automatische rechnerische Anpassung durchgeführt werden kann, so dass die Frequenz, der Strom und die Amplitude konstant gehalten werden.

Das Magnetventil VFS ist für eine Einrichtung eines Kraftfahrzeugs F, beispielsweise für eine automatische Getriebesteuerung ausgebildet. Mit dem erfindungsgemäßen Verfahren können natürlich beliebige Magnetventile VFS für diverse hydraulische Einrichtungen verwendet werden.

Die Funktionsweise dieser Vorrichtung 1 wird an Hand der Figuren 5 bis 9 näher erläutert. Figur 5 zeigt beispielhaft einen Verlauf eines Ventilstromes Im, bei dem die Frequenz des Dither-Signals 400 Hz und des PWM-Signals 1600 Hz beträgt. In Figur 5 ist die zugeordnete Steuerspannung des PWM-Signals dargestellt. Wie Figur 6 entnehmbar ist, sind nach jeweils zwei verlängerten PWM-Spannungspulsen zwei verkürzte PWM-Spannungspulse geschaltet. Dieser Vorgang wiederholt sich zyklisch. Als Folge dessen entsteht der in Figur 5 dargestellte Stromverlauf für den gemessenen Ventilstrom Im. Die erste Periode geht phasengleich für die Dither-Frequenz mit 400 Hz, beispielsweise von 0,1500 bis 0,1525 s. Durch die höhere Frequenz (1600 Hz Grundfrequenz) des PWM-Signals ergeben sich dann die "Zacken" im Stromverlauf, wobei jeweils bei der aufsteigenden Halbwelle eine Stromspitze und bei der abfallenden Halbwelle zwei Stromspitzen auftreten. Exakt jede zweite Periode wird das Tastverhältnis um die gewünschte Amplitude des Dither-Signals verändert. Somit ergibt sich eine synchronisierte Frequenz für das Dither-Signal, die exakt ein Viertel der Frequenz des PWM-Signals beträgt.

In alternativer Ausgestaltung der Erfindung ist vorgesehen, auch andere geradzahlige Teilerverhältnisse zu verwenden.

Der dargestellte Stromverlauf ist vom geregelten Strom des Stromreglers 4 nicht beeinflusst, da die 400 Hz herausgefiltert werden. Der Stromregler 4 regelt somit immer nur auf den Mittelwert, beispielsweise 0,5 A.

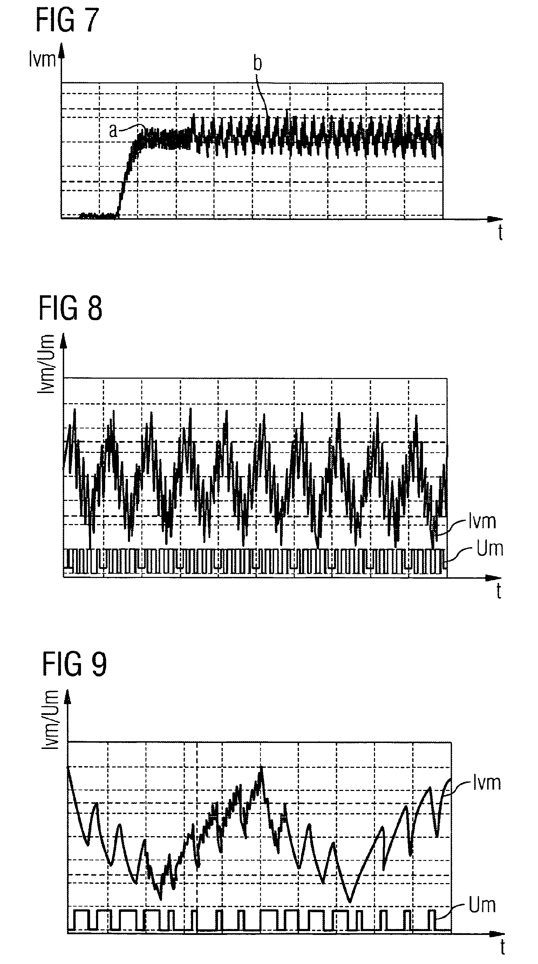

Figur 7 zeigt ein weiteres Diagramm, bei dem ein Stromimpuls des gemessenen Ventilstroms Ivm dargestellt ist. Das Stromsignal schwingt zunächst mit der hohen Grundfrequenz ein (Teil a der Kurve) und danach wird die Frequenz des Dither-Signals aufgeschaltet (Teil b), um die Reibungseffekte des Ankers zu reduzieren. Dadurch kann die Position des Ankers schneller verstellt werden. Wegen der konstanten, aber geringen Dither-Amplitude ist der mechanische Ausschlag minimal.

Figur 8 zeigt ein weiteres Diagramm, bei dem im oberen Bereich mehrere Perioden mit dem am Magnetventil gemessenen Ventilstrom Ivm dargestellt sind. Hier ist die niedrige Frequenz des Dither-Signals mit der hohen Grundfrequenz zu erkennen. Im unteren Bereich des Diagramms ist die entsprechende PWM-Spannung Um dargestellt.

Figur 9 zeigt ein weiteres Diagramm, bei dem der Stromverlauf Ivm und Spannungsverlauf Um über eine Periode aufgezeichnet sind. Die obere Kurve zeigt den Ventilstrom Ivm und die untere Kurve zeigt die PMW-Spannung Um.

## Patentansprüche

1. Verfahren zur Ermittlung eines Steuersignals (S) für ein Magnetventil (VFS), wobei das Steuersignal (S) ein mit der Frequenz eines Dither-Signals überlagertes PWM-Signal ist und eine so hohe Frequenz aufweist, dass der Anker des Magnetventils (VFS) zwischen einer geöffneten und einer geschlossenen Stellung eine Zwischenstellung, insbesondere eine Mittellage einnimmt, bei der der Anker mit geringen Auslenkungen mit der Frequenz eines Dither-Signals schwingt und wobei der Ankerstrom von einem Stromregler geregelt wird, **dadurch gekennzeichnet, dass** das PWM-Signal und das Dither-Signal unabhängig von der Stromregelung des Stromreglers (4) erzeugt werden, dass die Amplitude und/oder die Frequenz des Dither-Signals konstant ist und dass das PWM-Signal mit dem Dither-Signal zusammengeführt wird.

2. Verfahren nach Anspruch 1, **dadurch gekennzeichnet, dass** die Frequenz des Dither-Signals niedriger ist als die Frequenz des PWM-Signals.

3. Verfahren nach einem der vorhergehenden Ansprüche, **dadurch gekennzeichnet, dass** die Frequenz des Dither-Signals einen geradzahligen Teiler, vorzugsweise ein Viertel der Frequenz des PWM-Signals aufweist.

4. Verfahren nach einem der vorhergehenden Ansprüche, **dadurch gekennzeichnet, dass** die Frequenz für das Dither-Signal in Abhängigkeit vom verwendeten Magnetventiltyp (VFS) vorzugsweise im Bereich zwischen 100 und 500 Hz liegt.

5. Verfahren nach einem der vorhergehenden Ansprüche, **dadurch gekennzeichnet, dass** zur Bildung des Dither-Signals für das PWM-Signal wenigstens zwei verlängerte und nachfolgend zwei verkürzte PWM-Signale gebildet werden.

6. Verfahren nach einem der vorhergehenden Ansprüche, **dadurch gekennzeichnet, dass** bei einem Stromsprung das Dither-Signal verzögert aufgeschaltet wird.

7. Vorrichtung zur Steuerung eines Magnetventils (VFS) mit einem Verfahren nach einem der vorhergehenden Ansprüche, mit einer Stromreglereinheit (3), mit einer Dither-Einheit (11) und mit einer PWM-Einheit (8), **dadurch gekennzeichnet, dass** eine Rechnereinheit (6) verwendbar ist und dass die Rechnereinheit (6) ausgebildet ist, das PWM-Signal und das Dither-Signal mit konstanter Amplitude und/oder Frequenz unabhängig von der Stromreglereinheit (3) zu bilden und miteinander zu verknüpfen.

8. Vorrichtung nach Anspruch 7, **dadurch gekennzeichnet, dass** die Rechnereinheit (6) als zeitgesteuerte Rechnereinheit (TPU) ausgebildet ist.

9. Vorrichtung nach einem der Ansprüche 7 oder 8, **dadurch gekennzeichnet, dass** die Bildung des PWM-Signal und/oder des Dither-Signals mittels eines Softwareprogramms erfolgt.

10. Vorrichtung nach einem der Ansprüche 7 bis 9, **dadurch gekennzeichnet, dass** das Magnetventil (VFS) zur Steuerung einer mechanischen Einheit in einem Kraftfahrzeugs (F), vorzugsweise zur Steuerung eines automatischen Getriebes verwendet wird.

## Claims

1. Method for determining a control signal (S) for a solenoid valve (VFS), the control signal (S) being a PWM signal on which the frequency of a dither signal is superimposed and having such a high frequency that the armature of the solenoid valve (VFS) assumes an intermediate position, in particular a central position, between an open position and a closed position at which the armature oscillates with slight excursions at the frequency of a dither signal and the armature current is regulated by a current regulator, **characterised in that** the PWM signal and the dither signal are generated independently of the current regulation of the current regulator (4), **in that** the amplitude and/or the frequency of the dither signal is constant, and **in that** the PWM signal is combined with the dither signal.

2. Method according to claim 1, **characterised in that** the frequency of the dither signal is lower than the frequency of the PWM signal.

3. Method according to one of the preceding claims, **characterised in that** the frequency of the dither signal has an even-numbered divisor, preferably a quarter of the frequency of the PWM signal.

4. Method according to one of the preceding claims, **characterised in that** the frequency for the dither signal, as a function of the type of solenoid valve (VFS) used, is preferably in the range between 100 and 500 Hz.

5. Method according to one of the preceding claims, **characterised in that** to form the dither signal for the PWM signal at least two extended and thereafter two shortened PWM signals are formed.

6. Method according to one of the preceding claims, **characterised in that** the dither signal is switched off with a delay in the case of a current step.

7. Device for controlling a solenoid valve (VFS) with a method according to one of the preceding claims, comprising a current regulator unit (3), comprising a dither unit (11) and comprising a PWM unit (8), **characterised in that** a computer unit (6) can be used, and **in that** the computer unit (6) is embodied to form the PWM signal and the dither signal with constant amplitude and/or frequency independently of the current regulator unit (3) and to combine the two together.

8. Device according to claim 7, **characterised in that** the computer unit (6) is embodied as a time-controlled computer unit (TPU).

9. Device according to one of claims 7 or 8, **characterised in that** the PWM signal and/or the dither signal is/are formed by means of a software program.

10. Device according to one of claims 7 to 9, **characterised in that** the solenoid valve (VFS) is used for controlling a mechanical unit in a motor vehicle (F), preferably for controlling an automatic transmission.

## Revendications

1. Procédé pour obtenir un signal de commande (S) pour une électrovalve (VFS), dans lequel le signal de commande (S) est un signal modulé par impulsions de largeur variable auquel est superposée la fréquence d'un signal de vibration, et présente une fréquence assez élevée pour que l'armature de l'électrovalve (VFS) prenne, entre une position ouverte et une position fermée, une position intermédiaire, en particulier une position médiane, dans laquelle l'armature oscille avec de petites excursions à la fréquence d'un signal de vibration, et dans lequel le courant d'armature est réglé par un régulateur de courant, **caractérisé en ce que** le signal modulé par impulsions de largeur variable et le signal de vibration sont produits indépendamment de la régulation de courant du régulateur de courant (4), **en ce que** l'amplitude et/ou la fréquence du signal de vibration sont constantes et **en ce que** le signal modulé par impulsions de largeur variable est réuni au signal de vibration.

2. Procédé selon la revendication 1, **caractérisé en ce que** la fréquence du signal de vibration est plus basse que la fréquence du signal modulé par impulsions de largeur variable

3. Procédé selon une des revendications précédentes, **caractérisé en ce que** la fréquence du signal de vibration présente un diviseur entier, de préférence un quart de la fréquence du signal modulé par impulsions de largeur variable.

4. Procédé selon une des revendications précédentes, **caractérisé en ce que** la fréquence pour le signal de vibration est de préférence dans l'intervalle entre 100 et 500 Hz. selon le type d'électrovalve utilisé (VFS).

5. Procédé selon une des revendications précédentes, **caractérisé en ce que**, pour la formation du signal de vibration prévu pour le signal modulé par impulsions de largeur variable, on forme au moins deux signaux modulés par impulsions de largeur variable allongés, puis deux signaux modulés par impulsions de largeur variable raccourcis.

6. Procédé selon une des revendications précédentes, **caractérisé en ce que**, en présence d'un transitoire de courant, le signal de vibration reprend après une temporisation.

7. Dispositif pour commander une électrovalve (VFS) avec un procédé selon une des revendications précédentes, comprenant une unité régulateur de courant (3), une unité de vibration (11) et une unité de modulation par impulsions de largeur variable (8), **caractérisé en ce qu'**une unité ordinateur (6) peut être utilisée et **en ce que** l'unité ordinateur (6) est configurée pour former le signal modulé par impulsions de largeur variable et le signal de vibration avec une amplitude et/ou une fréquence constantes indépendamment de l'unité régulateur de courant (3) et pour les combiner entre eux.

8. Dispositif selon la revendication 7, **caractérisé en ce que** l'unité ordinateur (6) est réalisée sous la forme d'une unité ordinateur commandée par temporisateur (TPU).

9. Dispositif selon une des revendications 7 ou 8, **caractérisé en ce que** la formation du signal modulé par impulsions de largeur variable et/ou du signal de vibration s'effectue au moyen d'un programme de logiciel.

10. Dispositif selon une des revendications 7 à 9, **caractérisé en ce que** l'électrovalve (VFS) est utilisée pour commander une unité mécanique dans un véhicule automobile (F), de préférence pour commander une boîte de vitesses automatique.
